# EUROPEAN PATENT APPLICATION

(11) **EP 4 611 075 A1**
(43) Date of publication of application: **03.09.2025**
(21) Application number: 23898126.0
(22) Date of filing: 08.11.2023
(51) Int. Cl.: H01M 4/62, H01M 4/134, H01M 10/052, H01M 4/02

(54) **CONDUCTIVE SLURRY FOR SECONDARY BATTERY ELECTRODE, SECONDARY BATTERY ELECTRODE, AND SECONDARY BATTERY COMPRISING SAME**

(30) Priority: 29.11.2022 KR 20220163433
(71) Applicant: Dongjin Semichem Co., Ltd., Incheon 22824 (KR)
(72) Inventor: HAN, Ju Kyung, Hwaseong-si, Gyeonggi-do 18635 (KR); YANG, Hwi Chan, Hwaseong-si, Gyeonggi-do 18635 (KR); LEE, Soo Yeon, Hwaseong-si, Gyeonggi-do 18635 (KR); LEE, Joo Cheol, Hwaseong-si, Gyeonggi-do 18635 (KR); CHO, Young Hoon, Hwaseong-si, Gyeonggi-do 18635 (KR); GIM, Hyeon Seo, Hwaseong-si, Gyeonggi-do 18635 (KR)
(74) Representative: Grünecker Patent- und Rechtsanwälte PartG mbB
(86) International application number: PCT/KR2023/017840
(87) International publication number: WO 2024/117594

(57) **Abstract**

Provided is a conductive slurry for a secondary battery electrode that reduces the viscosity of a conductive slurry while simultaneously reducing the surface resistance of a film made from the conductive slurry. One embodiment of the present disclosure provides a conductive slurry for a secondary battery electrode comprising: a conductive material; and a dispersant, wherein the dispersant comprises a cellulose-based compound and an organic acid salt.

## Description

### Technical Field

The present disclosure relates to a conductive slurry for a secondary battery electrode, and in particular, to a conductive slurry for a secondary battery electrode, a secondary battery electrode, and a secondary battery including the same.

### Background Art

With the rapid advancement of electronic, communication and computer industries, electric vehicles, mobile phones, notebook computers and the like are repeating remarkable progresses, and as a power source to drive portable electronic devices, high energy density and stable output of batteries are required. Particularly, lithium secondary batteries are being most actively developed as a high-performance battery with the highest energy density among currently commercialized secondary batteries.

First, a conductive material is a material used to readily transfer electrons between electrode active material-electrode active material, or electrode active material-current collector, and is being mainly developed focusing on carbon-based materials. A conductive slurry is a solution obtained by dispersing such a conductive material in a solvent, and becomes a material that later forms a slurry for an electrode together with an electrode active material and a binder. These are becoming increasingly important as secondary batteries recently enter medium to large battery markets such as electric vehicles or ESS (energy storage system), and studies to increase theoretical capacity have been continuously conducted.

Negative electrodes of commercialized lithium secondary batteries are graphite-based. Graphite having a layered structure shows excellent cycle properties, and since potential when lithium ions are intercalated into graphite is close to equilibrium potential of lithium, the output voltage is not much different compared to when using lithium metal. However, commonly known theoretical capacity is 372 mAh/g, and there is a limit in electric capacity. Accordingly, as a negative electrode material having high specific capacity and excellent cyclic performance, silicon-based materials are receiving attention as a next-generation electrode that may replace graphite-based negative electrodes.

Silicon, which has the highest theoretical capacity (4,200 mAh/g) as a negative electrode material of a lithium secondary battery, has advantages of having a low potential difference with lithium, being environmental-friendly and having abundant reserves. However, silicon is a nonconductor, which is disadvantageous in terms of durability, and has a disadvantage of reducing electric capacity. In order to make up for this disadvantage, the need for improving conductivity of a silicon active material or using a conductive material has emerged.

Among these, carbon nanotubes (CNT) are rapidly emerging as a main material for the conductive material. Carbon nanotubes have a nano-sized diameter and a cylindrical shape, and have an sp² bonding structure with carbon atoms being arranged in a spiral shape. Based on such a structure, carbon nanotubes have received attention as a material equipped with excellent properties such as excellent electrical properties, strength, resilience and thermal conductivity, and have been studied as a new material in various fields.

CNT used as a secondary battery conductive material may increase energy density and improve a lifetime compared to existing powder-type carbon, and may reduce the size of a battery as well. Particularly, these advantages may act as greater advantages in batteries for electric vehicles requiring high capacity, rapid charge and discharge, and the like. However, despite these excellent advantages, low solubility and low dispersibility are pointed out as major problems of CNT. Particularly, CNT is present in a bundle or agglomerate structure in a solution due to strong Van-der Waals attraction force. Accordingly, studies on technologies for dispersing such CNT have been continuously conducted in the development of a conductive slurry.

### DISCLOSURE

### Technical Problem

The present disclosure is directed to providing a conductive slurry capable of uniformly dispersing a conductive material.

The present disclosure is also directed to providing a conductive slurry capable of reducing viscosity of the conductive slurry while simultaneously reducing surface resistance of a film made from the conductive slurry.

The present disclosure is also directed to providing a conductive slurry capable of controlling a particle size of a conductive material to be small.

The present disclosure is also directed to providing a secondary battery electrode capable of increasing energy density of a battery, and extending a lifetime by increasing a capacity retention rate.

The present disclosure is also directed to providing a secondary battery including the secondary battery electrode.

Objects of the present disclosure are not limited to the above-mentioned objects, and other objects and advantages of the present disclosure not mentioned will be understood by the following description, and more clearly understood by embodiments of the present disclosure. In addition, it may be readily understood that objects and advantages of the present disclosure may be embodied by means described in the claims and combinations thereof.

### Technical Solution

According to a first aspect of the present disclosure to achieve the above-described objects, there is provided a conductive slurry for a secondary battery electrode, the slurry including: a conductive material; and a dispersant, wherein the dispersant includes a cellulose-based compound and an organic acid salt.

According to a second aspect of the present disclosure, the conductive material may be any one selected from the group consisting of a single-walled carbon nanotube, a multi-walled carbon nanotube, graphene and combinations thereof in the first aspect.

According to a third aspect of the present disclosure, the single-walled carbon nanotube and the dispersant may have a weight ratio (single-walled carbon nanotube:dispersant) of 1:1 to 1:2 in the second aspect.

According to a fourth aspect of the present disclosure, the multi-walled carbon nanotube and the dispersant may have a weight ratio (multi-walled carbon nanotube:dispersant) of 1:0.5 to 1:1 in the second aspect.

According to a fifth aspect of the present disclosure, maximum intensity of D band with respect to maximum intensity of G band (I_{d}/I_{g}) of the conductive material, which is analyzed by Raman spectroscopy using a laser having a wavelength of 520 nm to 540 nm, may be from 0.01 to 2 in any one of the first to fourth aspects.

According to a sixth aspect of the present disclosure, a content of the conductive material may be less than 2.7% by weight based on a total weight of the conductive slurry for a secondary battery electrode in any one of the first to fifth aspects.

According to a seventh aspect of the present disclosure, the cellulose-based compound and the organic acid salt may have a weight ratio (cellulose-based compound:organic acid salt) of 1:0.15 to 1:0.5 in any one of the first to sixth aspects.

According to an eighth aspect of the present disclosure, the cellulose-based compound may be any one selected from the group consisting of cellulose, carboxymethyl cellulose, a salt of carboxymethyl cellulose, hydroxyethyl cellulose and combinations thereof in any one of the first to seventh aspects.

According to a ninth aspect of the present disclosure, the cellulose-based compound may have a weight average molecular weight (Mw) of 400,000 g/mol or less in any one of the first to eighth aspects.

According to a tenth aspect of the present disclosure, the cellulose-based compound may have a weight average molecular weight (Mw) of 50,000 g/mol or greater and 400,000 g/mol or less in any one of the first to ninth aspects.

According to an eleventh aspect of the present disclosure, the organic acid salt may include one or more carboxylic acid salt structures including a carboxylate and a cation in any one of the first to tenth aspects.

According to a twelfth aspect of the present disclosure, the organic acid salt may be any one selected from the group consisting of a citric acid salt, an oxalic acid salt, a succinic acid salt, an oxalosuccinic acid salt, a malic acid salt, a tartaric acid salt, an oxaloacetic acid salt, a polyacrylic acid salt, an EDTA (ethylenediaminetetraacetic acid) salt, an alginic acid salt and combinations thereof in any one of the first to eleventh aspects.

According to a thirteenth aspect of the present disclosure to achieve the above-described objects, there is provided a secondary battery electrode including: an electrode active material; a conductive material; and a dispersant, wherein the dispersant includes a cellulose-based compound and an organic acid salt.

According to a fourteenth aspect of the present disclosure, the electrode active material may include a silicon-based negative electrode active material in the thirteenth aspect.

According to a fifteenth aspect of the present disclosure, there is provided a secondary battery including the secondary battery electrode according to the thirteenth or fourteenth aspect.

The technical solutions do not list all the features of the present disclosure. Various features of the present disclosure and corresponding advantages and effects will be understood in more detail with reference to specific embodiments described below.

### Advantageous Effects

According to one aspect of the present disclosure, a conductive slurry capable of reducing viscosity of the conductive slurry while simultaneously reducing surface resistance of a film made from the conductive slurry by controlling a particle size of the conductive material to be small and uniformly dispersing the conductive material can be provided.

According to another aspect of the present disclosure, a secondary battery electrode, which is capable of increasing energy density of a battery and extending a lifetime by increasing a capacity retention rate, and a secondary battery including the same, can be provided.

Specific effects of the present disclosure in addition to the above-described effects will be described together while describing specific details for carrying out the disclosure hereinafter.

### Best Mode

In the present specification, singular forms include plural forms as well, unless the context clearly indicates otherwise.

When multiple embodiments are described in the present specification, effects of the present disclosure may be defined to include not only the working effects obtained from each embodiment itself, but also the effects obtained from an organic combination of each embodiment. For example, even when embodiments 1 and 2 are each independently described in the present specification, the effects obtained from an organic combination of the embodiments 1 and 2 may also be included in the effects of the present disclosure, unless the context clearly indicates otherwise.

In the present specification, a numerical range indicated by using a term 'to' represents a numerical range including values described before and after the term respectively as a lower limit and an upper limit. When numerical values as upper and lower limits of any numerical range are each disclosed as multiple values, the numerical range disclosed in the present specification may be understood as any numerical range having any one of the multiple lower limit values and any one of the multiple upper limit values respectively as a lower limit value and an upper limit value. For example, it may be understood that a to b, or c to d described in the present specification is described as a or greater and b or less, a or greater and d or less, c or greater and d or less, or c or greater and b or less.

In the present specification, a term such as "about" or "substantially" means a reasonable amount of variation of a term modified so as not to significantly change a final result. Such a term may be interpreted to include a variation of at least ±5% or at least ±10% within a limit that the variation does not invalidate the meaning of the word by the modification.

In the present specification, a "layer" or film may include a case in which, when observing an area on which the corresponding layer or film is present, the layer or film is formed on only a portion of the corresponding area in addition to the case in which the layer or film is formed over the entire corresponding area. For example, the surface of the layer or film may be defined to have a flat shape, a non-flat shape and a combination thereof; or a continuous shape, a discontinuous shape and a combination thereof. For example, when another member is formed as a layer or film directly on one member, coverage of the another member with respect to the surface of the one member may be defined as 1% or greater, 5% or greater, 10% or greater, 20% or greater, 30% or greater, 40% or greater, 50% or greater, 60% or greater, 70% or greater, 80% or greater, 85% or greater, 90% or greater, 95% or greater or 99% or greater.

In the present specification, an average particle diameter of particles may be defined as a particle diameter (D₅₀) when a cumulative percentage becomes 50% in a volume-based particle size distribution curve when measured using a laser diffraction particle size distribution measurement device.

In the present specification, a weight average molecular weight is a standard polystyrene-converted molecular weight and may be analyzed through a GPC (gel permeation chromatography) device. For example, in the GPC analysis method, the developing solvent may be tetrahydrofuran (THF), the column may be PL Olexis manufactured by Polymer Laboratories, the sample concentration may be 5 mg/mL, the amount of sample injection may be 100 µl, the flow rate may be 1 mL/min, the detector may be a Agilent High Temperature RI detector, and the column temperature may be set to 40°C.

According to one aspect of the present disclosure, there is provided a conductive slurry for a secondary battery electrode, the slurry including: a conductive material; and a dispersant, wherein the dispersant includes a cellulose-based compound and an organic acid salt.

In general, when a conductive material has low solubility and low dispersibility in a conductive slurry, the conductive material may be present in a bundle or agglomerate structure in the slurry due to strong Van-der Waals attraction force. When dispersing the conductive material using a surfactant in order to resolve such a problem, the surfactant needs to be added in a content exceeding the content of the conductive material, and therefore, there are problems in that viscosity of the conductive slurry increases and electrical conductivity decreases. Accordingly, the method of dispersing a conductive material simply by using a surfactant has a problem in that it is difficult to reduce viscosity of a conductive slurry and increase electrical conductivity at the same time. For example, when simply using a cellulose-based compound or an organic acid salt alone as the surfactant, a conductive material that is long and has a high specific surface area forms a bundle or agglomerate structure in a slurry, making it difficult to uniformly disperse the conductive material. Accordingly, as the conductive slurry has low viscosity and increased surface resistance, there is a problem in that it is difficult to increase electricity between electrode active material particles or with a metal current collector even when the conductive slurry is used in a secondary battery electrode.

According to one aspect of the present disclosure, the conductive material forming a bundle or agglomerate structure in the slurry may be effectively prevented by using a dispersant including a cellulose-based compound and an organic acid salt, and accordingly, viscosity of the conductive slurry may be reduced while simultaneously reducing surface resistance of a film made from the conductive slurry. Specifically, the cellulose-based compound may provide an advantage in that the glucose ring structure may bind to the surface of the conductive material, and the anion structure such as carboxylate interacts with an aqueous solvent to disperse the conductive material. The organic acid salt has both a hydrophobic carbon chain and a polar functional group, and the hydrophobic carbon chain may contribute to a dispersion effect of the conductive material and the polar functional group may contribute to favorable dispersion of the conductive material in an aqueous solvent.

Hereinafter, constitutions of the present disclosure will be described in more detail.

### 1. Conductive Slurry for Secondary Battery Electrode

The conductive slurry for a secondary battery electrode according to the present disclosure includes a conductive material that may act to increase conductivity between electrode active material particles or with a metal current collector in the electrode, and minimizes the binder from acting as a nonconductor.

Specifically, the conductive material may be any one selected from the group consisting of a single-walled carbon nanotube (SWCNT), a multi-walled carbon nanotube (MWCNT), graphene and combinations thereof, and more specifically, a single-walled carbon nanotube. The single-walled or multi-walled carbon nanotube is a linear carbon body that connects electrode active material-electrode active material or electrode active material-current collector to a much longer distance than powder, and may significantly contribute to the improvement in conductivity by readily forming a network structure. Accordingly, compared to existing powder-type carbon materials, the single-walled or multi-walled carbon nanotube may increase energy density of a battery, and extend battery lifetime. The graphene is a two-dimensional single layer separated from graphite formed by stacking a carbon layer having a hexagonal ring, and may have a thickness of 0.2 nm to 0 4 nm.

Specifically, the single-walled carbon nanotube may have a diameter of 1 nm to 2 nm and a length of 1 µm to 50 µm, and a BET (Brunauer, Emmett, Teller) specific surface area of 700 m²/g to 1600 m²/g.

Specifically, the multi-walled carbon nanotube may have a diameter of 5 nm to 10 nm and a length of 50 µm to 150 µm, and a BET (Brunauer, Emmett, Teller) specific surface area of 200 m²/g to 1000 m²/g.

Particularly, among conductive materials, carbon nanotubes have problems of low solubility and low dispersibility for a solvent in a conductive slurry due to the properties of long length and high BET specific surface area. In other words, carbon nanotubes may be present in a bundle or agglomerate structure in a slurry due to strong Van-der Waals attraction force. When dispersing a conductive material using a surfactant in order to resolve such a problem, the surfactant needs to be added in a content exceeding the content of the conductive material, and therefore, there are problems in that viscosity of the conductive slurry increases and electrical conductivity decreases. By using a dispersant including a cellulose-based compound and an organic acid salt for the conductive slurry according to one aspect of the present disclosure in order to resolve such a problem, the conductive material may be effectively prevented from forming a bundle or agglomerate structure in the slurry, and accordingly, viscosity of the conductive slurry may be reduced while simultaneously reducing surface resistance of a film made from the conductive slurry.

The conductive material according to the present disclosure may have an oxygen content of 0.1% to 3%. Specifically, the oxygen content of the conductive material may be analyzed by an elemental analysis method using an EA (elemental analyzer). The oxygen content of the conductive material may contribute to conductivity and dispersion properties. When the oxygen content of the conductive material satisfies the above-mentioned numerical range, the effects of conductivity and dispersion may be achieved.

According to another embodiment of the present disclosure, the single-walled carbon nanotube and the dispersant may have a weight ratio (single-walled carbon nanotube:dispersant) of 1:1 to 1:2, specifically 1:1 to 1:1.7 and more specifically 1:1 to 1:1.5. When the weight ratio between the single-walled carbon nanotube and the dispersant satisfies the above-mentioned range, the single-walled carbon nanotube may be effectively prevented from forming an agglomerate structure, and as a result, viscosity of the conductive slurry may be reduced while simultaneously increasing electrical conductivity of the conductive slurry.

According to another embodiment of the present disclosure, the multi-walled carbon nanotube and the dispersant may have a weight ratio (multi-walled carbon nanotube:dispersant) of 1:0.5 to 1:1, specifically 1:0.5 to 1:0.9 and more specifically 1:0.5 to 1:0.8. When the weight ratio between the multi-walled carbon nanotube and the dispersant satisfies the above-mentioned range, the multi-walled carbon nanotube may be effectively prevented from forming an agglomerate structure, and as a result, viscosity of the conductive slurry may be reduced while simultaneously increasing electrical conductivity of the conductive slurry.

According to another embodiment of the present disclosure, maximum intensity of D band with respect to maximum intensity of G band (I_{d}/I_{g}) of the conductive material, which is analyzed by Raman spectroscopy using a laser having a wavelength of 520 nm to 540 nm, may be from 0.01 to 2. Meanwhile, maximum intensity of D band with respect to maximum intensity of G band (I_{d}/I_{g}) of the conductive material may be a parameter indicating a defect of the conductive material. Maximum intensity of D band with respect to maximum intensity of G band (I_{d}/I_{g}) of the conductive material may vary depending on the type of the conductive material.

Specifically, maximum intensity of D band with respect to maximum intensity of G band (I_{d}/I_{g}) of the single-walled carbon nanotube may be from 0.01 to 0.25, specifically from 0.01 to 0.2 and more specifically from 0.01 to 0.15. When the maximum intensity of D band with respect to maximum intensity of G band (I_{d}/I_{g}) of the single-walled carbon nanotube satisfies the above-mentioned numerical range, viscosity of the conductive slurry may be reduced while simultaneously increasing electrical conductivity of the conductive slurry.

Specifically, maximum intensity of D band with respect to maximum intensity of G band (I_{d}/I_{g}) of the multi-walled carbon nanotube may be from 0.5 to 2.0, specifically from 0.5 to 1.8 and more specifically from 0.5 to 1.6. When the maximum intensity of D band with respect to maximum intensity of G band (I_{d}/I_{g}) of the multi-walled carbon nanotube satisfies the above-mentioned numerical range, viscosity of the conductive slurry may be reduced while simultaneously increasing electrical conductivity of the conductive slurry.

According to another embodiment of the present disclosure, the content of the conductive material may be less than 2.7% by weight, specifically from 0.5% by weight to 2.0% by weight and more specifically from 0.5% by weight to 1.0% by weight based on the total weight of the conductive slurry for a secondary battery electrode. When the content of the conductive material satisfies the above-mentioned numerical range, viscosity of the conductive slurry may be reduced while simultaneously reducing surface resistance of a film made from the conductive slurry.

The conductive slurry for a secondary battery electrode according to the present disclosure includes a dispersant effectively preventing the conductive material from forming an agglomerate structure by effectively dispersing the conductive material in the slurry.

The dispersant according to the present disclosure includes a cellulose-based compound and an organic acid salt. The cellulose-based compound may commonly contain a glucose ring molecular structure and a substituent in an equatorial direction bonding to the glucose ring. Specifically, the glucose ring molecular structure exhibits hydrophobicity and may bind to the surface of the conductive material, and the substituent in an equatorial direction contains a hydrophilic functional group and may form a hydrogen bond with water. The cellulose-based compound has properties of being rigid, and therefore, may effectively disperse the conductive material in the conductive slurry.

According to another embodiment of the present disclosure, the cellulose-based compound and the organic acid salt may have a weight ratio (cellulose-based compound:organic acid salt) of 1:0.15 to 1:0.5, specifically 1:0.3 to 1:0.5 and more specifically 1:0.4 to 1:0.5. When the weight ratio between the cellulose-based compound and the organic acid salt satisfies the above-mentioned numerical range, viscosity of the conductive slurry may be reduced while simultaneously increasing electrical conductivity of the conductive slurry.

For example, the cellulose-based compound may be any one selected from the group consisting of cellulose, carboxymethyl cellulose, a salt of carboxymethyl cellulose, hydroxyethyl cellulose and combinations thereof.

The cellulose-based compound may have a degree of etherification (or degree of substitution; DS) of 0.6 to 1.2, specifically 0.6 to 1.0 and more specifically 0.6 to 0.8. The degree of etherification means a degree to which three - R groups present in one repeating unit in the cellulose-based compound are substituted with a carboxymethyl group.

Specifically, the cellulose-based compound may have a weight average molecular weight (M_{w}) of 400,000 g/mol or less, 50,000 g/mol or greater and 400,000 g/mol or less and more specifically 50,000 g/mol or greater and 100,000 g/mol or less. The weight average molecular weight of the cellulose-based compound affects viscosity of the conductive slurry, and as the weight average molecular weight is smaller, viscosity of the conductive slurry may be reduced. When the weight average molecular weight of the cellulose-based compound satisfies the above-mentioned numerical range, the conductive material is effectively dispersed in the conductive slurry, further reducing viscosity of the conductive slurry, and increasing electrical conductivity of the conductive slurry.

The organic acid salt according to the present disclosure may include one or more carboxylic acid salt structures including a carboxylate and a cation, may specifically include two or more carboxylic acid salt structures, and more specifically include three of more carboxylic acid salt structures. As there are more carboxylic acid salt structures including a carboxylate and a cation in one molecule, both solubility and dispersibility of the conductive material for an aqueous solvent may increase. Accordingly, viscosity of the conductive slurry may be reduced by improving flowability of the conductive slurry, and electrical conductivity may increase as well. Meanwhile, the cation may be, for example, any one selected from the group consisting of sodium ions, lithium ions and potassium ions.

For example, the organic acid salt may be any one selected from the group consisting of a citric acid salt, an oxalic acid salt, a succinic acid salt, an oxalosuccinic acid salt, a malic acid salt, a tartaric acid salt, an oxaloacetic acid salt, a polyacrylic acid salt, an EDTA (ethylenediaminetetraacetic acid) salt, an alginic acid salt and combinations thereof.

According to another embodiment of the present disclosure, the conductive material, the cellulose-based compound and the organic acid salt may have a weight ratio (conductive material: cellulose-based compound: organic acid salt) of 0.5 to 2.5:0.3 to 4.0:0.07 to 1.5. When the weight ratio between the conductive material, the cellulose-based compound and the organic acid salt satisfies the above-mentioned numerical range, solubility and dispersibility of the conductive material are further improved in the conductive slurry, and as a result, viscosity of the conductive slurry may be reduced, and electrical conductivity of the conductive slurry may sufficiently increase.

The conductive slurry for a secondary battery electrode according to the present disclosure may further include a solvent that dissolves the conductive material and the dispersant. Specifically, the solvent may be an aqueous solvent, and more specifically, water. The content of the solvent may be a content excluding the conductive material and the dispersant based on the total weight of the conductive slurry for a secondary battery electrode.

The conductive slurry for a secondary battery electrode according to one embodiment of the present disclosure may have viscosity of 150 cP to 1,000 cP at 50 s⁻¹ and 23°C. By reducing the viscosity of the conductive slurry for a secondary battery electrode to the above-mentioned numerical range, the role of improving conductivity of the conductive material may be strengthened. The viscosity of the conductive slurry for a secondary battery electrode may be measured at, for example, cone 2°, Φ40 mm, 50 s⁻¹ and 23°C using a HR-2 viscometer (TA Instruments).

Surface resistance of a film made from the conductive slurry for a secondary battery electrode according to one embodiment of the present disclosure may vary depending on the type of the conductive material. When the conductive material is a single-walled carbon nanotube, surface resistance of the manufactured film may be 2.0 Q/sq or less, and when the conductive material is a multi-walled carbon nanotube, surface resistance of the manufactured film may be 20 Ω/sq or less. It may be inferred that, as the surface resistance of the manufactured film is reduced to the above-mentioned numerical range, the conductive material is effectively dispersed in the conductive slurry, contributing to the improvement in electrical conductivity. For example, surface resistance of the manufactured film may be measured using a FPP (four-point probe) method.

### 2. Secondary Battery Electrode

Another embodiment of the present disclosure provides a secondary battery electrode including: an electrode active material; a conductive material; and a dispersant, wherein the dispersant includes a cellulose-based compound and an organic acid salt. Specifically, the secondary battery electrode is a negative electrode, and may include a negative electrode current collector and a negative electrode active material layer disposed on the negative electrode current collector.

The negative electrode current collector may perform a passage role of transferring electrons from the outside to produce an electrochemical reaction in the negative electrode active material or receiving electrons from the negative electrode active material and sending the electrons to the outside. For example, as the negative electrode current collector, copper, stainless steel, aluminum, nickel, titanium, baked carbon, aluminum or stainless steel of which surface is treated with carbon, nickel, titanium, silver or the like, and the like may be used, and specifically, transition metals favorably adsorbing carbon such as copper and nickel may also be used as the current collector. For example, the negative electrode current collector may have a thickness of 6 µm to 55 µm, however, the thickness of the negative electrode current collector is not limited thereto.

The negative electrode active material layer according to the present disclosure may include a negative electrode active material, a conductive material and a negative electrode binder.

The negative electrode active material stores or releases lithium ions, and may perform a role of generating electricity. Specifically, the negative electrode active material may include at least any one of a silicon-based negative electrode active material and a graphite-based negative electrode active material, and may specifically include a silicon-based negative electrode active material. The silicon-based negative electrode active material has high theoretical capacity as a negative electrode material of a lithium secondary battery, and has advantages of having a low potential difference with lithium, being environmental-friendly and having abundant reserves. However, the silicon-based negative electrode active material is a non-conductor, which is disadvantageous in terms of durability, and has a disadvantage of reducing battery capacity. According to another aspect of the present disclosure, electrical conductivity of the conductive slurry may increase by favorably dispersing the conductive material in the conductive slurry through mixing the conductive slurry and the silicon-based negative electrode active material. As a result, non-conductor properties of the silicon-based negative electrode active material may be supplemented.

For example, the silicon-based active material may include one or more types selected from the group consisting of Si, SiOx (0<x≤2), Si-C composites and Si-Y alloys (Y is any one element selected from the group consisting of alkali metals, alkaline earth metals, transition metals, group 13 elements, group 14 elements and rare earth elements).

The graphite-based active material may include one or more types selected from the group consisting of artificial graphite, natural graphite, graphitized carbon fibers and graphitized meso carbon microbeads.

For example, the content of the negative electrode active material may be from 80% by weight to 97% by weight based on the total solid content included in the negative electrode active material layer.

The negative electrode binder may suppress separation between the negative electrode active material particles, or between the negative electrode and the current collector. As the negative electrode binder, polymers commonly used in electrodes in the related art may be used. Nonlimiting examples of such a negative electrode binder may include poly(vinylidene fluoride co-hexafluoropropylene), poly(vinylidene fluoride-co-trichloroethylene), poly(methyl methacrylate), poly(ethylhexyl acrylate), poly(butyl acrylate), poly(acrylonitrile), poly(vinyl pyrrolidone), poly(vinyl acetate), poly(ethylene-co-vinyl acetate), poly(ethylene oxide), polyacrylate, cellulose acetate, cellulose acetate butyrate, cellulose acetate propionate, cyanoethyl pullulan, cyanoethyl poly(vinyl alcohol), cyanoethyl cellulose, cyanoethyl sucrose, pullulan, carboxymethyl cellulose and the like, but are not limited thereto.

### 3. Secondary Battery

Another embodiment of the present disclosure provides a secondary battery including the electrode for a secondary battery.

The secondary battery according to the present disclosure includes a separator; a positive electrode disposed on one surface of the separator; a negative electrode disposed on the other side of the separator; and an electrolyte liquid. Description on the negative electrode overlaps with the description provided in the section of the electrode for a secondary battery, and therefore, is not included.

### Separator

A porous substrate according to the present disclosure is capable of providing a migration path for lithium ions while preventing a short circuit by electrically insulating the negative electrode and the positive electrode, and may be a porous structure having high resistance to the electrolyte liquid and having a fine pore diameter.

As a material forming the porous substrate, organic materials or inorganic materials having electrical insulating properties may be used without particular limit. The porous substrate may include at least one selected from the group consisting of, for example, polyolefin, polyethylene terephthalate, polybutylene terephthalate, polyacetal, polyamide, polycarbonate, polyimide, polyetheretherketone, polyethersulfone, polyphenylene oxide, polyphenylene sulfide and polyethylene naphthalene, and may specifically include polyolefin. Polyolefin not only has excellent coatability, but also decreases the separator thickness to increase the ratio of the electrode active material layer in the battery, thereby increasing capacity per volume. Specifically, the polyolefin may have a weight average molecular weight (M_{w}) of 100,000 g/mol to 500,000 g/mol. When the weight average molecular weight of the polyolefin is less than the above-mentioned numerical range, it may be difficult to secure sufficient dynamic properties, and when the weight average molecular weight is greater than the above-mentioned numerical range, a shutdown function may not be obtained or molding may become difficult. The shutdown function means a function of, when a temperature of a secondary battery increases, blocking ion migration and preventing thermal runaway of the battery through closing the pores of the porous substrate by dissolving a thermoplastic resin.

The porous substrate may have a thickness of, for example, 3 µm to 50 µm or 4 µm to 30 µm. When the thickness of the porous substrate is less than the above-mentioned numerical range, the function as a conductive barrier may not be sufficient, and when the thickness is greater than the above-mentioned numerical range, resistance of the separator may excessively increase.

The pores included in the porous substrate may have an average diameter of, for example, 10 nm to 100 nm. The pores included in the porous substrate are structured to be interconnected to each other, and gas or liquid may pass from one surface to the other surface of the porous substrate.

The separator according to another embodiment of the present disclosure may include a coating layer capable of improving mechanical strength and heat resistance of the separator for a secondary battery and increasing ion conductivity in the secondary battery, and disposed on at least one surface of the porous substrate.

The coating layer according to the present disclosure may include a binder polymer and inorganic particles.

The binder polymer according to the present disclosure interconnects and stably fixes the inorganic particles. As the binder polymer, one type selected from the group consisting of, for example, polyvinylidene fluoride-co-hexafluoropropylene, polyvinylidene fluoride-co-trichloroethylene, polymethyl methacrylate, polyacrylonitrile, polyvinyl pyrrolidone, polyvinyl acetate, poly(ethylene-co-vinyl acetate), polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, an acrylonitrile-styrene butadiene copolymer, polyimide and styrene-butadiene rubber, or a mixture of two or more types thereof may be used.

According to another embodiment of the present disclosure, the inorganic particles and the binder polymer may have a weight ratio (inorganic particles:binder polymer) of 50:50 to 99:1, and specifically 70:30 to 95:5. When the content ratio of the inorganic particles with respect to the binder polymer is less than the above-mentioned numerical range, the content of the binder polymer increases, and as a result, performance of improving thermal safety of the separator may decline, and pore size and porosity decrease due to a decrease in the empty space formed between the inorganic particles, causing decline in the performance of a final battery. When the content ratio of the inorganic particles with respect to the binder polymer is greater than the above-mentioned numerical range, the content of the binder polymer is too small, weakening peeling resistance of the coating layer.

The inorganic particles according to the present disclosure may contribute to improvement in mechanical strength and heat resistance of the separator for a secondary battery. Specifically, the inorganic particles are not particularly limited as long as they are electrochemically stable. In other words, the inorganic particles that may be used in the present disclosure are not particularly limited as long as they do not undergo oxidation and/or reduction reactions in an operating voltage range (for example, 0 V to 5 V based on Li/Li⁺) of the applied secondary battery.

For example, when using inorganic particles with a high dielectric constant as the inorganic particles, ion conductivity of the electrolyte liquid may be improved by the inorganic particles contributing to an increase in the degree of dissociation of an electrolyte salt such as a lithium salt in the liquid electrolyte. For the above-described reasons, the inorganic particles may be inorganic particles with a dielectric constant of 5 or greater, inorganic particles having a lithium ion transfer ability, or a mixture thereof.

The inorganic particles with a dielectric constant of 5 or greater may be one type selected from the group consisting of Al₂O₃, SiO₂, ZrO₂, AlO(OH), Al(OH)₃, Mg(OH)₂, BaSO₄, TiO₂, BaTiO₃, Pb(ZrₓTi₁₋ₓ)O₃ (PZT, herein, 0<x<1), Pb₁₋ₓLaₓZr_{1-y}Ti_{y}O₃ (PLZT, herein, 0<x<1, 0<y<1), (1-x)Pb(Mg_{1/3}Nb_{2/3})O₃₋ₓPbTiO₃ (PMN-PT, herein 0<x<1), HfO₂, SrTiO₃, SnO₂, CeO₂, MgO, NiO, CaO, ZnO and SiC, or a mixture of two or more types thereof.

The inorganic particles having a lithium ion transfer ability may be one type selected from the group consisting of lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y} series glass (0<x<4, 0<y<13), lithium lanthanum titanate (LiₓLa_{y}TiO₃, 0<x<2, 0<y<3), lithium germanium thiophosphate (LiₓGe_{y}P₂S_{w}, 0<x<4, 0<y<1, 0<z<1, 0<w<5), lithium nitride (LiₓN_{y}, 0<x<4, 0<y<2), SiS₂ series glass (LiₓSi_{y}S_{z}, 0<x<3, 0<y<2, 0<z<4) and P₂S₅ series glass (LiₓP_{y}S_{z}, 0<x<3, 0<y<3, 0<z<7), or a mixture of two or more types thereof.

For example, the inorganic particles may have an average particle diameter (D₅₀) of 1 nm to 10 µm, specifically 10 nm to 2 µm and more specifically 50 nm to 1 µm for forming a coating layer with uniform thickness and for proper porosity. The "average particle diameter (D₅₀)" means a particle diameter at the 50% point in the particle diameter-dependent cumulative particle number distribution. The average particle diameter may be measured using a laser diffraction method. Specifically, powder to be measured is dispersed in a dispersion medium, and then introduced to a commercially available laser diffraction particle size measurement device (for example: Microtrac S3500), and when the particles pass through the laser beam, a difference in the diffraction pattern depending on the particle size may be measured to calculate the particle size distribution.

Specifically, the coating layer may have a thickness of 0.1 µm to 10 µm, specifically 1 µm to 3 µm and more specifically 1.4 µm to 1.6 µm. When the thickness of the coating layer satisfies the above-mentioned numerical range, insulating properties and thermal stability of the separator may increase, and energy density of the battery may be improved as well.

### Positive Electrode

The positive electrode according to the present disclosure may include a positive electrode current collector and a positive electrode active material layer disposed on at least one surface of the positive electrode current collector. The positive electrode active material layer may include a positive electrode active material, a conductive material and a positive electrode binder.

For example, the positive electrode current collector is not particularly limited as long as it has high conductivity without inducing chemical changes to a battery. Specifically, as the positive electrode current collector, copper, stainless steel, aluminum, nickel, titanium, baked carbon, copper or stainless steel of which surface is treated with carbon, nickel, titanium silver or the like, an aluminum-cadmium alloy and the like may be used. The positive electrode current collector may commonly have a thickness of 6 µm to 20 µm.

For example, the positive electrode active material may include a lithium transition metal oxide. The lithium transition metal oxide may be at least one selected from the group consisting of, for example, Liₓ₁CoO₂ (0.5<x1<1.3), Liₓ₂NiO₂ (0.5<x2<1.3), Liₓ₃MnO₂ (0.5<x3<1.3), Liₓ₄Mn₂O₄ (0.5<x4<1.3), Liₓ₅(Niₐ₁Co_{b1}Mn_{c1})O₂ (0.5<x5<1.3, 0<a1<1, 0<b1<1, 0<c1<1, a1+b1+c1=1), Liₓ₆Ni_{1-y1}Co_{y1}O₂ (0.5<x6<1.3, 0<y1<1), Liₓ₇Co_{1-y2}Mn_{y2}O₂ (0.5<x7<1.3, 0≤y2<1), Liₓ₈Ni_{1-y3}Mn_{y3}O₂ (0.5<x8<1.3, 0≤y3<1), Liₓ₉(Niₐ₂Co_{b2}Mn_{c2})O₄ (0.5<x9<1.3, 0<a2<2, 0<b2<2, 0<c2<2, a2+b2+c2=2), Liₓ₁₀Mn_{2-z1}Ni_{z1}O₄ (0.5<x10<1.3, 0<z1<2), Liₓ₁₁Mn_{2-z2}Co_{z2}O₄ (0.5<x11<1.3, 0<z2<2), Liₓ₁₂CoPO₄ (0.5<x12<1.3) and Liₓ₁₃FePO₄ (0.5<x13<1.3).

The conductive material used in the positive electrode may be the same as or different from the conductive material used in the negative electrode.

The positive electrode binder may be the same as or different from the negative electrode binder.

### Electrolyte Liquid

The electrolyte liquid according to the present disclosure may include a solvent and a lithium salt.

The solvent according to the present disclosure may be one type selected from the group consisting of, for example, propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone, ethyl methyl carbonate (EMC), gamma-butyrolactone (GBL), fluoroethylene carbonate (FEC), methyl formate, ethyl formate, propyl formate, methyl acetate, ethyl acetate, propyl acetate, pentyl acetate, methyl propionate, ethyl propionate, ethyl propionate and butyl propionate, or a mixture of two or more types thereof.

The lithium salt according to the present disclosure may include, for example, anions such as NO₃⁻, F⁻, Cl⁻, Br⁻, I⁻ and PF₆⁻.

The secondary battery according to the present disclosure may be a cylindrical, prismatic or pouch-type secondary battery, but is not particularly limited as long as it corresponds to a charge and discharge device.

Another embodiment of the present disclosure may provide a battery module including the secondary battery as a unit cell, and a battery pack including the same. The battery pack may be used as a power source for one or more types of medium- to large-sized devices selected from the group consisting of, for example, power tools; electric vehicles including electric vehicles (EV), hybrid electric vehicles (HEV) and plug-in hybrid electric vehicles (PHEV); and systems for power storage.

Hereinafter, examples of the present disclosure will be described in detail so that those skilled in the art to which the present disclosure pertains may readily work the present disclosure. However, these are for illustrative purposes only, and the scope of a right of the present disclosure is not limited by the following description.

### [Preparation Example 1-1: Preparation of SWCNT Slurry]

### Preparation of Dispersant

Distilled water (950 g) was introduced to a round bottom flask, and after adding trisodium citrate (50 g) thereto, the solution was stirred for 2 hours at room temperature to prepare 5 wt% of an aqueous citric acid salt solution.

Distilled water (950 g) and CMC (carboxymethyl cellulose) (50 g) with an adjusted weight average molecular weight (Mw) were added to a round bottom flask, and then the solution was stirred for 2 hours at room temperature to prepare 5 wt% of an aqueous CMC solution.

The aqueous citric acid salt solution and the aqueous CMC solution were used to prepare the following conductive slurry.

### Preparation of Conductive Slurry

To a beaker, a conductive material (SWCNT), a dispersant (aqueous CMC solution and/or aqueous citric acid salt solution) and the remaining distilled water were introduced, and the mixture was stirred for 60 minutes at 500 rpm to 2,000 rpm using a high-speed stirrer (Dispermat LC 55-E). The stirred result was introduced to a high-pressure disperser (MN400BF, Micronox), and dispersed at high pressure under a specific condition (5 pass or 7 pass and 700 bar) to finally prepare a SWCNT slurry. Comparative Examples 1 to 3 were not able to undergo pass. In Examples 1 to 11, high-pressure dispersion was conducted under a condition of 5 pass and 700 bar, and in Examples 12 to 18, high-pressure dispersion was conducted under a condition of 7 pass and 700 bar.

Meanwhile, the remaining content is defined as distilled water in the following Tables 1, 3, 5, 7, 9 and 11.

**[Table 1]**

| Unit: wt% | SWCNT Defect (D/G Ratio) | SWCNT (A) | Dispersant (B) | | | Ratio of B with respect to A (%) | Ratio of Citric Acid Salt with respect to CMC (%) |
|---|---|---|---|---|---|---|---|
| | | | CMC¹⁾ | CMC²⁾ | Citri c Acid Salt | | |
| Comparative Example 1 | 0.1 | 2.5 | 2.5 | 0 | 0 | 100 | CMC alone |
| Comparative Example 2 | 0.1 | 2.5 | 0 | 2.5 | 0 | 100 | CMC alone |
| Comparative Example 3 | 0.1 | 2.5 | 0 | 0 | 2.5 | 100 | Citric acid salt alone |
| Example 1 | 0.1 | 0.5 | 0 | 0.28 | 0.14 | 84 | 50.0 |
| Example 2 | 0.1 | 0.5 | 0 | 0.46 | 0.04 | 100 | 8.7 |
| Example 3 | 0.1 | 0.5 | 0 | 0.43 | 0.07 | 100 | 16.3 |
| Example 4 | 0.1 | 0.5 | 0 | 0.4 | 0.1 | 100 | 25.0 |
| Example 5 | 0.1 | 0.5 | 0 | 0.34 | 0.16 | 100 | 47.1 |
| Example 6 | 0.1 | 0.5 | 0 | 0.3 | 0.2 | 100 | 66.7 |
| Example 7 | 0.1 | 1.5 | 0 | 1.4 | 0.1 | 100 | 7.1 |
| Example 8 | 0.1 | 1.5 | 0 | 1.3 | 0.2 | 100 | 15.4 |
| Example 9 | 0.1 | 1.5 | 0 | 1.2 | 0.3 | 100 | 25.0 |
| Example 10 | 0.1 | 1.5 | 0 | 1 | 0.5 | 100 | 50.0 |
| Example 11 | 0.1 | 1.5 | 0 | 0.9 | 0.6 | 100 | 66.7 |
| Example 12 | 0.1 | 2.5 | 0 | 2.3 | 0.2 | 100 | 8.7 |
| Example 13 | 0.1 | 2.5 | 0 | 2.15 | 0.35 | 100 | 16.3 |
| Example 14 | 0.1 | 2.5 | 0 | 2 | 0.5 | 100 | 25.0 |
| Example 15 | 0.1 | 2.5 | 0 | 1.7 | 0.8 | 100 | 47.1 |
| Example 16 | 0.1 | 2.5 | 0 | 1.5 | 1 | 100 | 66.7 |
| Example 17 | 0.1 | 2.7 | 0 | 2 | 0.7 | 100 | 35.0 |
| Example 18 | 0.1 | 2.7 | 0 | 1.8 | 0.9 | 100 | 50.0 |
| 1) CMC having weight average molecular weight of 50,000 g/mol to 100,000 g/mol | | | | | | | |
| 2) CMC having weight average molecular weight of greater than 100,000 g/mol and less than 400,000 g/mol | | | | | | | |

### [Experimental Example 1: Evaluation on Conductive Slurry of Preparation Example 1-1]

### 1) Viscosity of Conductive Slurry

Viscosity of the conductive slurry according to Preparation Example 1-1 is a value measured at cone 2°, Φ40 mm, 50 s⁻¹ and 23°C using a HR-2 viscometer (TA Instruments).

### 2) Measurement of Surface Resistance of Film Made from Conductive Slurry

The conductive slurry was coated on one surface of a PET film using an applicator, and then dried in an oven at 90°C to prepare a film specimen (10 cmx15 cm) having a thickness of 7 µm. Surface resistance is a value measured by a FPP (four-point probe) method using a surface resistance measurement device (MCP-T700; resistivity measurement; Mitsubishi Chemical Analytech), and the results are shown in the following Table 2.

**[Table 2]**

| Classification | Viscosity (cP) | Surface Resistance (Ω/sq) |
|---|---|---|
| Comparative Example 1 | Unable to undergo pass | - |
| Comparative Example 2 | Unable to undergo pass | - |
| Comparative Example 3 | Unable to undergo pass | - |
| Example 1 | 1,800 | 4.9 |
| Example 2 | 1,350 | 3.5 |
| Example 3 | 680 | 2.0 |
| Example 4 | 530 | 1.8 |
| Example 5 | 400 | 1.5 |
| Example 6 | 1,000 | 4.0 |
| Example 7 | 1,400 | 3.9 |
| Example 8 | 890 | 1.9 |
| Example 9 | 780 | 1.7 |
| Example 10 | 710 | 1.4 |
| Example 11 | 1,000 | 4.1 |
| Example 12 | 1,500 | 3.9 |
| Example 13 | 1,000 | 2.0 |
| Example 14 | 960 | 1.8 |
| Example 15 | 915 | 1.3 |
| Example 16 | 1,200 | 4.1 |
| Example 17 | 2,500 | 5.5 |
| Example 18 | 2,200 | 5.3 |

Comparing Comparative Examples 1 to 3 and Examples 12 to 16 in terms of the composition of the dispersant in Table 2, it may be identified that, by using a cellulose-based compound and an organic acid salt as the dispersant, viscosity of the conductive slurry decreases, and surface resistance of the film made from the conductive slurry significantly decreases. In other words, Comparative Examples 1 and 2 using CMC alone had very high viscosity, and were not able to undergo pass, and Comparative Example 3 using an organic acid salt alone also had very high viscosity, and was unable to undergo pass.

Comparing Examples 1 to 6 in terms of the ratio of the dispersant with respect to the conductive material, it may be identified that, when the SWCNT and the dispersant have a weight ratio (SWCNT:dispersant) of 1:1 or greater, viscosity of the conductive slurry decreases, and surface resistance of the film made from the conductive slurry decreases.

Comparing Examples 2 to 16 in terms of the ratio of the citric acid salt with respect to the cellulose-based compound in the dispersant, it may be identified that, when the cellulose-based compound and the citric acid salt have a weight ratio (cellulose-based compound:citric acid salt) of 1:0.15 to 1:0.5, viscosity of the conductive slurry further decreases, and surface resistance of the film made from the conductive slurry further decreases.

Comparing Examples 1 to 18 in terms of the content of the conductive material, it may be identified that, when the content is less than 2.7% by weight based on the total weight of the conductive slurry, viscosity of the conductive slurry further decreases, and surface resistance of the film made from the conductive slurry further decreases.

### [Preparation Example 1-2: Preparation of SWCNT Slurry]

A SWCNT slurry was prepared in the same manner as in Preparation Example 1-1, except that CMC having a weight average molecular weight of 50,000 g/mol to 100,000 g/mol was used.

Meanwhile, high-pressure dispersion was conducted under a condition of 5 pass and 700 bar in Examples 19 to 28, 36 and 37, and high-pressure dispersion was conducted under a condition of 7 pass and 700 bar in Examples 29 to 35, 38 and 39.

**[Table 3]**

| Unit: wt% | SWCNT Defect (D/G Ratio) | SWCNT (A) | Dispersant (B) | | | Ratio of B with respect to A (%) | Ratio of Citric Acid Salt with respect to CMC (%) |
|---|---|---|---|---|---|---|---|
| | | | CMC¹⁾ | CMC²⁾ | Citri c Acid Salt | | |
| Example 19 | 0.1 | 0.5 | 0.46 | 0 | 0.04 | 100 | 8.7 |
| Example 20 | 0.1 | 0.5 | 0.43 | 0 | 0.07 | 100 | 16.3 |
| Example 21 | 0.1 | 0.5 | 0.4 | 0 | 0.1 | 100 | 25.0 |
| Example 22 | 0.1 | 0.5 | 0.34 | 0 | 0.16 | 100 | 47.1 |
| Example 23 | 0.1 | 0.5 | 0.3 | 0 | 0.2 | 100 | 66.7 |
| Example 24 | 0.1 | 1.5 | 1.4 | 0 | 0.1 | 100 | 7.1 |
| Example 25 | 0.1 | 1.5 | 1.3 | 0 | 0.2 | 100 | 15.4 |
| Example 26 | 0.1 | 1.5 | 1.2 | 0 | 0.3 | 100 | 25.0 |
| Example 27 | 0.1 | 1.5 | 1 | 0 | 0.5 | 100 | 50.0 |
| Example 28 | 0.1 | 1.5 | 0.9 | 0 | 0.6 | 100 | 66.7 |
| Example 29 | 0.1 | 2.5 | 2.3 | 0 | 0.2 | 100 | 8.7 |
| Example 30 | 0.1 | 2.5 | 2.15 | 0 | 0.35 | 100 | 16.3 |
| Example 31 | 0.1 | 2.5 | 2 | 0 | 0.5 | 100 | 25.0 |
| Example 32 | 0.1 | 2.5 | 1.7 | 0 | 0.8 | 100 | 47.1 |
| Example 33 | 0.1 | 2.5 | 1.5 | 0 | 1 | 100 | 66.7 |
| Example 34 | 0.1 | 2.7 | 2 | 0 | 0.7 | 100 | 35.0 |
| Example 35 | 0.1 | 2.7 | 1.8 | 0 | 0.9 | 100 | 50.0 |
| Example 36 | 0.1 | 1.5 | 2.1 | 0 | 0.9 | 200 | 42.9 |
| Example 37 | 0.1 | 1.5 | 1.8 | 0 | 1.2 | 200 | 66.7 |
| Example 38 | 0.1 | 2.5 | 3.5 | 0 | 1.5 | 200 | 42.9 |
| Example 39 | 0.1 | 2.5 | 3 | 0 | 2 | 200 | 66.7 |
| Example 40 | 0.1 | 0.5 | 0 | 0.7 | 0.35 | 210 | 50.0 |
| 1) CMC having weight average molecular weight of 50,000 g/mol to 100,000 g/mol | | | | | | | |
| 2) CMC having weight average molecular weight of greater than 100,000 g/mol and less than 400,000 g/mol | | | | | | | |

### [Experimental Example 2: Evaluation on Conductive Slurry of Preparation Example 1-2]

Viscosity of the conductive slurry of Preparation Example 1-2 and surface resistance of a film made from the conductive slurry were measured in the same manner as in Experimental Example 1, and the results are shown in the following Table 4.

**[Table 4]**

| Classification | Viscosity (cP) | Surface Resistance (Ω/sq) |
|---|---|---|
| Example 19 | 1,000 | 3.5 |
| Example 20 | 560 | 1.7 |
| Example 21 | 485 | 1.3 |
| Example 22 | 320 | 1.0 |
| Example 23 | 900 | 3.7 |
| Example 24 | 1,150 | 3.4 |
| Example 25 | 800 | 1.9 |
| Example 26 | 680 | 1.7 |
| Example 27 | 570 | 1.0 |
| Example 28 | 960 | 3.5 |
| Example 29 | 1,320 | 3.4 |
| Example 30 | 965 | 1.8 |
| Example 31 | 900 | 1.3 |
| Example 32 | 850 | 1.2 |
| Example 33 | 1,050 | 3.6 |
| Example 34 | 2,250 | 5.0 |
| Example 35 | 2,000 | 4.7 |
| Example 36 | 460 | 1.9 |
| Example 37 | 1,550 | 3.9 |
| Example 38 | 720 | 2.0 |
| Example 39 | 1, 900 | 4.0 |
| Example 40 | 1,100 | 5.3 |

Comparing Tables 2 and 4 in terms of the weight average molecular weight of CMC, it may be identified that, by using CMC having a relatively low weight average molecular weight of 50,000 g/mol or greater and 100,000 g/mol or less, the effect of dispersion of the conductive material is improved, and accordingly, viscosity of the conductive slurry further decreases, and surface resistance of the film made from the conductive slurry further decreases.

Comparing Examples 19 to 33 in terms of the ratio of the citric acid salt with respect to the cellulose-based compound in the dispersant, it may be identified that, when the cellulose-based compound and the citric acid salt have a weight ratio (cellulose-based compound:citric acid salt) of 1:0.15 to 1:0.5, viscosity of the conductive slurry further decreases, and surface resistance of the film made from the conductive slurry further decreases.

Comparing Examples 19 to 35 in terms of the content of the conductive material, it may be identified that, when the content is less than 2.7% by weight based on the total weight of the conductive slurry, viscosity of the conductive slurry further decreases, and surface resistance of the film made from the conductive slurry further decreases.

Comparing Examples 19 to 24 and Example 40 in terms of the ratio of the dispersant with respect to the conductive material, it may be identified that, when the SWCNT and the dispersant have a weight ratio (SWCNT:dispersant) of 1:1 to 1:2, the effect of dispersion of the conductive material is further improved, and accordingly, viscosity of the conductive slurry decreases, and surface resistance of the film made from the conductive slurry further decreases.

### [Preparation Example 1-3: Preparation of SWCNT Slurry]

For Examples 41 to 45, a SWCNT slurry was prepared in the same manner as in Preparation Example 1-1, except that CMC having a weight average molecular weight of 400,000 g/mol was used, and high-pressure dispersion was conducted under a condition of 5 pass and 700 bar.

For Examples 46 to 49, a SWCNT slurry was prepared in the same manner as in Preparation Example 1-1, except that a conductive material having maximum intensity of D band with respect to maximum intensity of G band (I_{d}/I_{g}) of SWCNT, which is analyzed by Raman spectroscopy using a laser having a wavelength of 520 nm to 540 nm, of 0.3 was used, and high-pressure dispersion was conducted under a condition of 5 pass and 700 bar.

**[Table 5]**

| Unit: wt% | SWCNT Defect (D/G Ratio) | SWCNT (A) | Dispersant (B) | | | | Ratio of B with respe ct to A (%) | Ratio of Citric Acid Salt with respect to CMC (%) |
|---|---|---|---|---|---|---|---|---|
| | | | CMC¹⁾ | CMC²⁾ | CMC³⁾ | Citri c Acid Salt | | |
| Example 41 | 0.1 | 0.5 | 0 | 0 | 0.46 | 0.04 | 100 | 8.7 |
| Example 42 | 0.1 | 0.5 | 0 | 0 | 0.43 | 0.07 | 100 | 16.3 |
| Example 43 | 0.1 | 0.5 | 0 | 0 | 0.4 | 0.1 | 100 | 25.0 |
| Example 44 | 0.1 | 0.5 | 0 | 0 | 0.34 | 0.16 | 100 | 47.1 |
| Example 45 | 0.1 | 0.5 | 0 | 0 | 0.3 | 0.2 | 100 | 66.7 |
| Example 46 | 0.3 | 0.5 | 0 | 0.4 | 0 | 0.1 | 100 | 25.0 |
| Example 47 | 0.3 | 0.5 | 0 | 0.34 | 0 | 0.16 | 100 | 47.1 |
| Example 48 | 0.3 | 0.5 | 0.4 | 0 | 0 | 0.1 | 100 | 25.0 |
| Example 49 | 0.3 | 0.5 | 0.34 | 0 | 0 | 0.16 | 100 | 47.1 |
| 1) CMC having weight average molecular weight of 50,000 g/mol to 100,000 g/mol | | | | | | | | |
| 2) CMC having weight average molecular weight of greater than 100,000 g/mol and less than 400,000 g/mol | | | | | | | | |
| 3) CMC having weight average molecular weight of 400,000 g/mol or greater | | | | | | | | |

### [Experimental Example 3: Evaluation on Conductive Slurry of Preparation Example 1-3]

Viscosity of the conductive slurry of Preparation Example 1-3 and surface resistance of a film made from the conductive slurry were measured in the same manner as in Experimental Example 1, and the results are shown in the following Table 6.

**[Table 6]**

| Classification | Viscosity (cP) | Surface Resistance (Ω/sq) |
|---|---|---|
| Example 41 | 2,100 | 5.5 |
| Example 42 | 1,950 | 4.5 |
| Example 43 | 1,650 | 4.4 |
| Example 44 | 1,400 | 4.1 |
| Example 45 | 2,450 | 4.6 |
| Example 46 | 340 | 8.0 |
| Example 47 | 290 | 6.9 |
| Example 48 | 290 | 7.3 |
| Example 49 | 195 | 6.2 |

Comparing Tables 2, 4 and 6 in terms of the weight average molecular weight of CMC, it may be identified that, as the CMC has a lower weight average molecular weight, the effect of dispersion of the conductive material is further improved, and accordingly, viscosity of the conductive slurry further decreases, and surface resistance of the film made from the conductive slurry decreases as well.

Comparing Examples 4, 5, 21 and 22 and Examples 46 to 49 in terms of the maximum intensity of D band with respect to maximum intensity of G band (I_{d}/I_{g}), which is a parameter indicating a defect of SWCNT, it may be identified that, when I_{d}/I_{g} is greater than 0.25, surface resistance excessively increases although viscosity of the conductive slurry may decrease.

### [Preparation Example 2: Preparation of MWCNT Slurry]

A conductive slurry was prepared in the same manner as in Preparation Example 1-1, except that, as the conductive material, MWCNT was used instead of the SWCNT.

High-pressure dispersion was conducted under a condition of 5 pass and 700 bar in Examples 50 to 56, 61 to 64 and 69 to 72, and high-pressure dispersion was conducted under a condition of 7 pass and 700 bar in the remaining Examples.

**[Table 7]**

| Unit: wt% | MWCNT Defect (D/G Ratio) | MWCNT (A) | Dispersant (B) | | Ratio of B with respec t to A (%) | Ratio of Citric Acid Salt with respect to CMC (%) |
|---|---|---|---|---|---|---|
| | | | CMC¹⁾ | Citri c Acid Salt | | |
| Example 50 | 0.45 | 1.5 | 1.0 | 0.5 | 100 | 50 |
| Example 51 | 0.5 | 1.5 | 1.0 | 0.5 | 100 | 50 |
| Example 52 | 2.0 | 1.5 | 0.4 | 0.2 | 40 | 50.0 |
| Example 53 | 2.0 | 1.5 | 0.7 | 0.05 | 50 | 7.1 |
| Example 54 | 2.0 | 1.5 | 0.65 | 0.1 | 50 | 15.4 |
| Example 55 | 2.0 | 1.5 | 0.5 | 0.25 | 50 | 50.0 |
| Example 56 | 2.0 | 1.5 | 0.45 | 0.3 | 50 | 66.7 |
| Example 57 | 2.0 | 2.5 | 1.15 | 0.1 | 50 | 8.7 |
| Example 58 | 2.0 | 2.5 | 1.05 | 0.2 | 50 | 19.0 |
| Example 59 | 2.0 | 2.5 | 0.85 | 0.4 | 50 | 47.1 |
| Example 60 | 2.0 | 2.5 | 0.75 | 0.5 | 50 | 66.7 |
| Example 61 | 2.0 | 1.5 | 1.4 | 0.1 | 100 | 7.1 |
| Example 62 | 2.0 | 1.5 | 1.3 | 0.2 | 100 | 15.4 |
| Example 63 | 2.0 | 1.5 | 1 | 0.5 | 100 | 50.0 |
| Example 64 | 2.0 | 1.5 | 0.9 | 0.6 | 100 | 66.7 |
| Example 65 | 2.0 | 2.5 | 2.3 | 0.2 | 100 | 8.7 |
| Example 66 | 2.0 | 2.5 | 2.15 | 0.35 | 100 | 16.3 |
| Example 67 | 2.0 | 2.5 | 1.7 | 0.8 | 100 | 47.1 |
| Example 68 | 2.0 | 2.5 | 1.5 | 1 | 100 | 66.7 |
| Example 69 | 2.0 | 1.5 | 1.1 | 0.55 | 110 | 50.0 |
| Example 70 | 2.1 | 1.5 | 1.3 | 0.2 | 100 | 15.4 |
| Example 71 | 2.1 | 1.5 | 1 | 0.5 | 100 | 50.0 |
| Example 72 | 2.1 | 1.5 | 0.9 | 0.6 | 100 | 66.7 |
| Example 73 | 2.1 | 2.5 | 1.7 | 0.8 | 100 | 47.1 |
| 1) CMC having weight average molecular weight of 50,000 g/mol to 100,000 g/mol | | | | | | |

### [Experimental Example 4: Evaluation on Conductive Slurry of Preparation Example 2]

Viscosity of the conductive slurry of Preparation Example 2 and surface resistance of a film made from the conductive slurry were measured in the same manner as in Experimental Example 1, and the results are shown in the following Table 8.

**[Table 8]**

| Classification | Viscosity (cP) | Surface Resistance (Q/sq) |
|---|---|---|
| Example 50 | 1,730 | 12.0 |
| Example 51 | 950 | 12.5 |
| Example 52 | 2100 | 29.0 |
| Example 53 | 1400 | 23.0 |
| Example 54 | 850 | 17.0 |
| Example 55 | 690 | 15.0 |
| Example 56 | 950 | 22.0 |
| Example 57 | 1550 | 23.5 |
| Example 58 | 930 | 15.0 |
| Example 59 | 700 | 14.0 |
| Example 60 | 900 | 22.0 |
| Example 61 | 1150 | 25.0 |
| Example 62 | 750 | 18.0 |
| Example 63 | 500 | 16.5 |
| Example 64 | 700 | 23.0 |
| Example 65 | 1300 | 26.0 |
| Example 66 | 800 | 19.5 |
| Example 67 | 600 | 17.0 |
| Example 68 | 750 | 23.5 |
| Example 69 | 600 | 30.0 |
| Example 70 | 650 | 38.0 |
| Example 71 | 400 | 37.0 |
| Example 72 | 600 | 37.0 |
| Example 73 | 500 | 40.0 |

Comparing Examples 51 to 56 and 61 to 64 in terms of the ratio of the dispersant with respect to the conductive material in Table 8, it may be identified that, when the MWCNT and the dispersant have a weight ratio (MWCNT:dispersant) of 1:0.5 to 1:1, the effect of dispersion of the conductive material is further improved, and accordingly, viscosity of the conductive slurry decreases, and surface resistance of the film made from the conductive slurry further decreases.

Comparing Examples 50, 51, 63 and 70 to 72 in terms of the maximum intensity of D band with respect to maximum intensity of G band (I_{d}/I_{g}), which is a parameter indicating a defect of MWCNT, it may be identified that, when I_{d}/I_{g} is from 0.5 to 2.0, the effect of dispersion of the MWCNT is further improved, and accordingly, viscosity of the conductive slurry decreases, and surface resistance of the film made from the conductive slurry further decreases.

Comparing Examples 53 to 68 in terms of the ratio of the citric acid salt with respect to the cellulose-based compound in the dispersant, it may be identified that, when the cellulose-based compound and the citric acid salt have a weight ratio (cellulose-based compound:citric acid salt) of 1:0.15 to 1:0.5, viscosity of the conductive slurry further decreases, and surface resistance of the film made from the conductive slurry further decreases.

### [Preparation Example 3: Preparation of SWCNT Conductive Slurry with Different Type of Organic Acid Salt]

A conductive slurry was prepared in the same manner as in Preparation Example 1-1, except that, as the organic acid salt, a succinic acid salt was used instead of the citric acid salt.

High-pressure dispersion was conducted under a condition of 5 pass and 700 bar in Examples 74 to 84, and high-pressure dispersion was conducted under a condition of 7 pass and 700 bar in the remaining Examples.

**[Table 9]**

| Unit: wt% | SWCNT Defect (D/G Ratio) | SWCNT (A) | Dispersant (B) | | Ratio of B with respect to A (%) | Ratio of Succinic Acid Salt with respect to CMC (%) |
|---|---|---|---|---|---|---|
| | | | CMC²⁾ | Succin ic Acid Salt | | |
| Example 74 | 0.1 | 0.5 | 0.28 | 0.14 | 84 | 50.0 |
| Example 75 | 0.1 | 0.5 | 0.46 | 0.04 | 100 | 8.7 |
| Example 76 | 0.1 | 0.5 | 0.43 | 0.07 | 100 | 16.3 |
| Example 77 | 0.1 | 0.5 | 0.4 | 0.1 | 100 | 25.0 |
| Example 78 | 0.1 | 0.5 | 0.34 | 0.16 | 100 | 47.1 |
| Example 79 | 0.1 | 0.5 | 0.3 | 0.2 | 100 | 66.7 |
| Example 80 | 0.1 | 1.5 | 1.4 | 0.1 | 100 | 7.1 |
| Example 81 | 0.1 | 1.5 | 1.3 | 0.2 | 100 | 15.4 |
| Example 82 | 0.1 | 1.5 | 1.2 | 0.3 | 100 | 25.0 |
| Example 83 | 0.1 | 1.5 | 1 | 0.5 | 100 | 50.0 |
| Example 84 | 0.1 | 1.5 | 0.9 | 0.6 | 100 | 66.7 |
| Example 85 | 0.1 | 2.5 | 2.3 | 0.2 | 100 | 8.7 |
| Example 86 | 0.1 | 2.5 | 2.15 | 0.35 | 100 | 16.3 |
| Example 87 | 0.1 | 2.5 | 2 | 0.5 | 100 | 25.0 |
| Example 88 | 0.1 | 2.5 | 1.7 | 0.8 | 100 | 47.1 |
| Example 89 | 0.1 | 2.5 | 1.5 | 1 | 100 | 66.7 |
| 2) CMC having weight average molecular weight of greater than 100,000 g/mol and less than 400,000 g/mol | | | | | | |

### [Experimental Example 5: Evaluation on Conductive Slurry of Preparation Example 3]

Viscosity of the conductive slurry of Preparation Example 3 and surface resistance of a film made from the conductive slurry were measured in the same manner as in Experimental Example 1, and the results are shown in the following Table 10.

**[Table 10]**

| Classification | Viscosity (cP) | Surface Resistance (Q/sq) |
|---|---|---|
| Example 74 | 2,000 | 5.3 |
| Example 75 | 1,450 | 3.7 |
| Example 76 | 760 | 2.0 |
| Example 77 | 640 | 1.9 |
| Example 78 | 500 | 1.6 |
| Example 79 | 700 | 4.0 |
| Example 80 | 1,450 | 4.0 |
| Example 81 | 950 | 1.9 |
| Example 82 | 830 | 1.8 |
| Example 83 | 770 | 1.8 |
| Example 84 | 1,050 | 4.2 |
| Example 85 | 1,550 | 4.0 |
| Example 86 | 1,000 | 2.0 |
| Example 87 | 990 | 1.9 |
| Example 88 | 940 | 1.6 |
| Example 89 | 1,200 | 4.3 |

### [Preparation Example 4: Preparation of MWCNT Conductive Slurry with Different Type of Salt]

A conductive slurry was prepared in the same manner as in Preparation Example 3, except that, as the conductive material, MWCNT was used instead of the SWCNT.

High-pressure dispersion was conducted under a condition of 5 pass and 700 bar in Examples 90 to 94, and 99 to 102, and high-pressure dispersion was conducted under a condition of 7 pass and 700 bar in the remaining Examples.

**[Table 11]**

| Unit: wt% | MWCNT Defect (D/G Ratio) | MWCNT (A) | Dispersant (B) | | Ratio of B with respect to A (%) | Ratio of Succinic Acid Salt with respect to CMC (%) |
|---|---|---|---|---|---|---|
| | | | CMC²⁾ | Succini c Acid Salt | | |
| Example 90 | 2.0 | 1.5 | 0.4 | 0.2 | 40 | 50.0 |
| Example 91 | 2.0 | 1.5 | 0.7 | 0.05 | 50 | 7.1 |
| Example 92 | 2.0 | 1.5 | 0.65 | 0.1 | 50 | 15.4 |
| Example 93 | 2.0 | 1.5 | 0.5 | 0.25 | 50 | 50.0 |
| Example 94 | 2.0 | 1.5 | 0.45 | 0.3 | 50 | 66.7 |
| Example 95 | 2.0 | 2.5 | 1.15 | 0.1 | 50 | 8.7 |
| Example 96 | 2.0 | 2.5 | 1.05 | 0.2 | 50 | 19.0 |
| Example 97 | 2.0 | 2.5 | 0.85 | 0.4 | 50 | 47.1 |
| Example 98 | 2.0 | 2.5 | 0.75 | 0.5 | 50 | 66.7 |
| Example 99 | 2.0 | 1.5 | 1.4 | 0.1 | 100 | 7.1 |
| Example 100 | 2.0 | 1.5 | 1.3 | 0.2 | 100 | 15.4 |
| Example 101 | 2.0 | 1.5 | 1 | 0.5 | 100 | 50.0 |
| Example 102 | 2.0 | 1.5 | 0.9 | 0.6 | 100 | 66.7 |
| Example 103 | 2.0 | 2.5 | 2.3 | 0.2 | 100 | 8.7 |
| Example 104 | 2.0 | 2.5 | 2.15 | 0.35 | 100 | 16.3 |
| Example 105 | 2.0 | 2.5 | 1.7 | 0.8 | 100 | 47.1 |
| Example 106 | 2.0 | 2.5 | 1.5 | 1 | 100 | 66.7 |
| 2) CMC having weight average molecular weight of greater than 100,000 g/mol and less than 400,000 g/mol | | | | | | |

### [Experimental Example 6: Evaluation on Conductive Slurry of Preparation Example 4]

Viscosity of the conductive slurry of Preparation Example 4 and surface resistance of a film made from the conductive slurry were measured in the same manner as in Experimental Example 1, and the results are shown in the following Table 12.

**[Table 12]**

| Classification | Viscosity (cP) | Surface Resistance (Q/sq) |
|---|---|---|
| Example 90 | 2300 | 33.0 |
| Example 91 | 1550 | 25.0 |
| Example 92 | 1000 | 18.0 |
| Example 93 | 820 | 16.0 |
| Example 94 | 1100 | 23.0 |
| Example 95 | 1700 | 25.0 |
| Example 96 | 1000 | 17.0 |
| Example 97 | 850 | 16.0 |
| Example 98 | 1000 | 23.5 |
| Example 99 | 1300 | 26.0 |
| Example 100 | 900 | 19.0 |
| Example 101 | 600 | 18.0 |
| Example 102 | 800 | 24.0 |
| Example 103 | 1400 | 26.5 |
| Example 104 | 950 | 20.0 |
| Example 105 | 700 | 19.0 |
| Example 106 | 800 | 25.0 |

Referring to Tables 10 and 12, it may be identified that the conductive slurry using the succinic acid salt shows a similar tendency to the conductive slurry using the citric acid salt.

Hereinbefore, preferred embodiments of the present disclosure have been described in detail, however, the scope of a right of the present disclosure is not limited thereto, and various modified and improved forms made by those skilled in the art using the basic concept of the present disclosure defined in the claims also fall within the scope of a right of the present disclosure.

## Claims

1. A conductive slurry for a secondary battery electrode, the slurry comprising:
a conductive material; and
a dispersant,
wherein the dispersant includes a cellulose-based compound and an organic acid salt.

2. The conductive slurry of claim 1, wherein the conductive material is any one selected from the group consisting of a single-walled carbon nanotube, a multi-walled carbon nanotube, graphene and combinations thereof.

3. The conductive slurry of claim 2, wherein the single-walled carbon nanotube and the dispersant have a weight ratio of 1:1 to 1:2.

4. The conductive slurry of claim 2, wherein the multi-walled carbon nanotube and the dispersant have a weight ratio of 1:0.5 to 1:1.

5. The conductive slurry of claim 1, wherein maximum intensity of D band with respect to maximum intensity of G band (I_{d}/I_{g}) of the conductive material, which is analyzed by Raman spectroscopy using a laser having a wavelength of 520 nm to 540 nm, is from 0.01 to 2.

6. The conductive slurry of claim 1, wherein a content of the conductive material is less than 2.7% by weight based on a total weight of the conductive slurry for a secondary battery electrode.

7. The conductive slurry of claim 1, wherein the cellulose-based compound and the organic acid salt have a weight ratio of 1:0.15 to 1:0.5.

8. The conductive slurry of claim 1, wherein the cellulose-based compound is any one selected from the group consisting of cellulose, carboxymethyl cellulose, a salt of carboxymethyl cellulose, hydroxyethyl cellulose and combinations thereof.

9. The conductive slurry of claim 1, wherein the cellulose-based compound has a weight average molecular weight (M_{w}) of 400,000 g/mol or less.

10. The conductive slurry of claim 9, wherein the cellulose-based compound has a weight average molecular weight (M_{w}) of 50,000 g/mol or greater and 400,000 g/mol or less.

11. The conductive slurry of claim 1, wherein the organic acid salt includes one or more carboxylic acid salt structures including a carboxylate and a cation.

12. The conductive slurry of claim 11, wherein the organic acid salt is any one selected from the group consisting of a citric acid salt, an oxalic acid salt, a succinic acid salt, an oxalosuccinic acid salt, a malic acid salt, a tartaric acid salt, an oxaloacetic acid salt, a polyacrylic acid salt, an EDTA (ethylenediaminetetraacetic acid) salt, an alginic acid salt and combinations thereof.

13. A secondary battery electrode comprising:
an electrode active material;
a conductive material; and
a dispersant,
wherein the dispersant includes a cellulose-based compound and an organic acid salt.

14. The secondary battery electrode of claim 13, wherein the electrode active material includes a silicon-based negative electrode active material.

15. A secondary battery comprising the secondary battery electrode of claim 13 or 14.
